# EUROPÄISCHE PATENTANMELDUNG

(11) **EP 1 312 940 A1**
(43) Veröffentlichungstag der Anmeldung: **21.05.2003**
(21) Anmeldenummer: 02022724.5
(22) Anmeldetag: 11.10.2002
(51) Int. Cl.: G01V 8/24, G01S 17/02, G08B 13/184, F16P 3/14

(54) **Lichtschranke mit Lichtwellenleiter**

(30) Priorität: 17.10.2001 DE 10151327
(71) Anmelder: SICK AG, 79183 Waldkirch (DE)
(72) Erfinder: Wüstefeld, Martin, 79350 Sexau (DE); Henkel, Olaf, 79276 REute (DE)
(74) Vertreter: Ludewigt, Christoph

(57) **Zusammenfassung**

Eine optoelektronische Vorrichtung zur variablen, richtungsveränderlichen Strahlführung wird erzeugt von einer aktiven Lichtsendeeinheit, die einen Sendestrahl in die Überwachungsstrecke aussendet. In der Überwachungsstrecke wird der Sendestrahl von einer Einkoppeloptik erfasst und in einen Lichtwellenleiter eingekoppelt. Der aus dem Lichtwellenleiter austretende Sendestrahl wird von einer Auskoppeloptik auf einer Lichtempfangseinheit abgebildet. Im Bereicht des flexiblen Lichtwellenleiters kann die Richtung der einfallenden und austretenden Teilstrahlen beliebig im Raum verändert werden.

## Beschreibung

Die Erfindung betrifft eine optoelektronische Vorrichtung nach dem Oberbegriff des Patentanspruchs 1.

Derartige optoelektronische Vorrichtungen werden beispielsweise verwendet, um den Zugang zu einem Maschinenarbeitsbereich, nach Art einer Lichtschranke, zu überwachen. Hierbei wird der zu überwachende Zugangsbereich von einer, einen Lichtstrahl aussendenden Lichtsendeeinheit durchstrahlt und bei freiem Lichtweg von einer Lichtempfangseinheit aufgenommen. In der Lichtempfangseinheit ist ein photoelektrischer Wandler angeordnet, welcher die auftreffende Lichtenergie in eine elektrische Größe umwandelt. Wird dieser Lichtweg durch ein Objekt unterbrochen, ändert sich die am photoelektrischen Wandler anliegende elektrische Größe. Durch Auswertung dieser elektrischen Größe ist es möglich, Objekte, die sich dem Maschinenarbeitsbereich nähern, zu erkennen, um dann ggf. ein optisches und/oder akustisches Warnsignal auszugeben und/oder die Maschine still zu setzen.

Abhängig vom jeweiligen Anwendungsbereich der Zugangsabsicherung ist es erforderlich, dass gleichzeitig mehrere räumlich getrennte Lichtstrahlen in einem modularen System zusammen wirken müssen, um auf diesem Wege bei der Absicherung eines komplexen Bereiches die Gefahr des Über-/Unterschreitens, des Hintertretens oder des Umgehens der Schutzeinrichtung auszuschließen.

Zur Lösung derartiger Aufgabenstellungen ist es bekannt, gleichzeitig mehrere autarke Lichtschrankensysteme, d. h. mehrere Lichtsender mit mehreren Lichtempfänger zu verwenden und deren Ausgangssignale elektronisch zu einem Gesamtsignal zusammenzufassen, mit welchem dann ggf. die Maschine außer Betrieb gesetzt wird. Da in der Regel jeder dieser Lichtsender und Lichtempfänger mit einer Versorgungs-/Signalleitung verbunden ist, wird damit bei komplexen Absicherungsbereichen ein großer Installationsaufwand notwendig, der sich gleichzeitig in hohen Systemkosten auswirkt.

Eine weiterhin für diese Aufgaben bekannte Lösung besteht darin, den Lichtstrahl einer Lichtschranke zwischen Lichtsender und Lichtempfänger mit ausgerichteten Umlenkspiegeln über eine abgewinkelte Lichtstrecke zu führen. Hierbei treten in der praktischen Anwendung die nachfolgend näher beschriebenen Probleme auf.
a) Die Ausrichtung der Umlenkspiegel erfordert, besonders bei größeren Überwachungsstrecken, eine genaue Justage der Umlenkspiegel, um den Sendelichtstrahl dem Lichtempfänger zuzuführen, denn, wie sich aus dem allgemein bekannten Reflexionsgesetz leicht ableiten lässt, wird ein Winkelfehler am Umlenkspiegel beim reflektierten Lichtstrahl die doppelte Winkelabweichung aufweisen.
b) Neben dieser Justageanforderung sind aus dem gleichen Grunde auch die Anforderungen an die mechanische Langzeitstabilität der Umlenkspiegelhalterungen notwendig. Im rauen industriellen Umfeld erfordert dies nicht selten schwingungsgedämpfte und gegen mechanische Einwirkungen geschützte Halterungen dieser Umlenkspiegel.
c) Um die unter a) und b) aufgezeigten Nachteile zu überwinden, werden deshalb, zur Vermeidung von Systemstörungen, bei diesen Systemen divergente Strahlbündel des Sendelichts verwendet, die den Umlenkspiegel in ihrem Querschnitt überstrahlen. Diese Umlenkspiegel reflektieren dadurch aber nur eine Teilmenge des Sendelichtstrahles, wobei sich aufgrund der Planheit der Umlenkspiegel die ursprüngliche Strahldivergenz auch nach der Umlenkung weiter fortsetzt. Dies bedeutet, dass auch der Lichtempfänger wiederum überstrahl wird und somit nur eine geringe Teilmenge der vom Lichtsender abgegebenen Strahlung dem Photoempfänger zugeführt wird. Besonders gravierend wirkt sich dieser Einfluss dann aus, wenn es notwendig ist, den Lichtstrahl mehrfach durch Umlenkspiegel umzulenken.

Der Erfindung liegt die Aufgabe zu Grunde, mit einer Vorrichtung, der eingangs genannten Art, die Nachteile des bekannten Standes der Technik zu überwinden und mit möglichst wenig aktiven Lichtsende- und Lichtempfangseinheiten ein modulares Lichtstrahlsystem zu schaffen, in welchem die Anforderungen an die Justagegenauigkeit und mechanische Langzeitstabilität reduziert ist.

Die Aufgabe wird durch eine Vorrichtung mit den Merkmalen des Anspruches 1 gelöst.

Die erfindungsgemäße Vorrichtung weist eine Lichtsendeeinheit und eine Lichtempfangseinheit auf. Zwischen diesen beiden Einheiten wird eine Strahlstrecke erzeugt, in der Objekte, welche den Lichtstrahl unterbrechen, erkannt werden. Diese Strahlstrecke kann durch Einbringen der erfindungsgemäßen Umlenkeinheit in ihrer Ausbreitungsrichtung verändert werden. Die Umlenkeinheit, welche in die Strahlstrecke eingesetzt wird, besteht aus einer Einkoppeloptik, mit der die auftreffende Strahlung in einen Lichtwellenleiter eingespeist wird. Mit diesem Lichtleiter, der vorzugsweise flexibel ausgebildet ist, kann nun jede beliebige Richtungsveränderung zwischen der Lichteintrittsfläche und der Lichtaustrittsfläche vorgenommen werden. Das aus der Lichtaustrittfläche austretende Licht wird sodann mit einer Auskoppeloptik auf der Lichtempfangseinheit abgebildet.

Der wesentliche Vorteil der erfindungsgemäßen Vorrichtung ist darin zu sehen, dass die in der Praxis auftretenden Winkelfehler bei der Justage und Halterung dieser Umlenkeinheit sich bei dem austretenden Lichtstrahl nicht mit dem doppelten Winkelbetrag auswirken, wodurch die Strahldivergenz des Lichtstrahles zum Ausgleich dieser Winkelfehler kleiner sein kann. Damit könnte die Strahldichte d. h. die energetische Betriebsreserve erhöht werden. Ebenfalls kann durch die abbildende Ein- und Auskoppeloptik auch innerhalb der Strahlstrecke in die Charakteristik des Strahlverlaufs, d. h. auf die Größe der Strahlkonvergenz bzw. -divergenz, eingegriffen werden.

Besonders vorteilhaft erweist sich die erfindungsgemäße Umlenkeinheit gegenüber dem Stand der Technik dann, wenn der Lichtstrahl um Hindernisse herum zugeführt werden muss. Dies ist im Falle der justagekritischen Umlenkspiegel oft nur mit einer Vielzahl einzelner, exakt zueinander auszurichtenden Spiegelflächen, möglich, während bei der Umlenkeinheit nach der Erfindung ggf. nur die Länge des Lichtwellenleiters anzupassen ist.

Da die Ausführungsform der Lichtwellenleiter in einem sehr großen Bereich an die jeweiligen Einsatzbedingungen angepasst werden kann, ist es nach der Erfindung auch möglich, die Umlenkeinheit z. B. in aggressiven Medien, in hohen Temperaturbereichen oder an schmutzgefährdeten Einsatzorten zu verwenden.

In den Unteransprüchen sind weitere vorteilhafte Ausführungsformen beschrieben.

Die Erfindung wird im Folgenden anhand von Ausführungsbeispielen unter Bezugnahme auf die Figuren 1 bis 3 beschrieben. In den Zeichnungen zeigen:
- Fig. 1: eine schematische Prinzipdarstellung einer erfindungsgemäßen optoelektronischen Vorrichtung mit einer variablen Umlenkeinheit,
- Fig. 2: eine schematische Prinzipdarstellung einer optoelektronischen Vorrichtung, die sich aus zwei Vorrichtungen zur Strahlumlenkung und drei Teilstrahlen zusammensetzt,
- Fig. 3: eine Weiterbildung der erfindungsgemäßen optoelektronischen Vorrichtung mit zwei parallel versetzten Strahlen, wobei die Lichtsende- und Lichtempfangseinheit in einem gemeinsamen Gehäuse angeordnet sind.

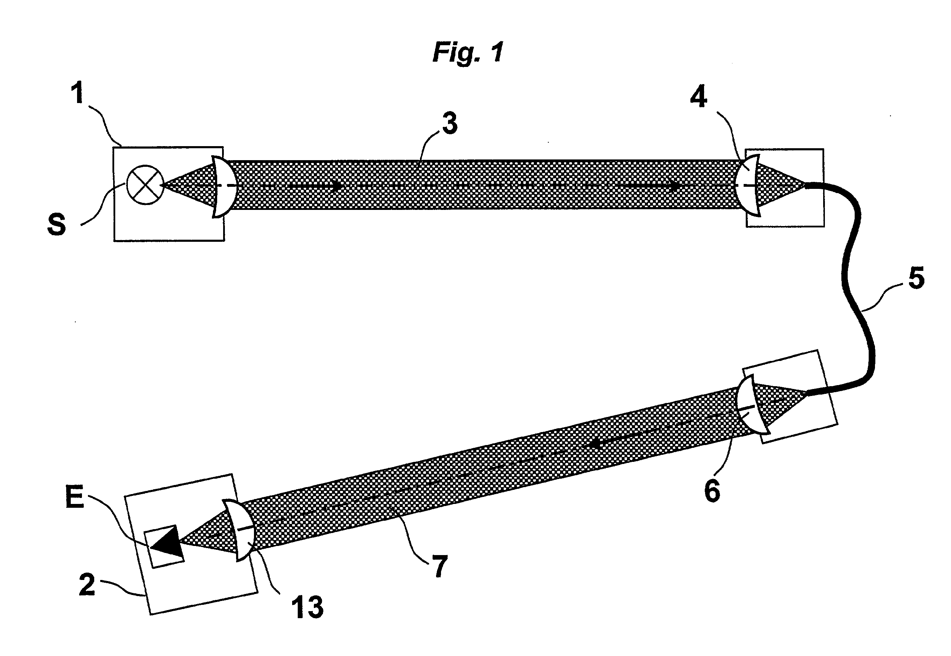

Nach Fig. 1 sendet eine Lichtquelle S in der Lichtsendeeinheit 1 einen annähernd parallelen Sendestrahl 3 in eine Überwachungsstrecke. Der Sendestrahl 3 trifft dabei auf eine Einkoppeloptik 4, welche den Sendestrahl fokussiert und in einen Lichtwellenleiter 5 einkoppelt. Innerhalb dieses Lichtwellenleiters 5, der vorzugsweise flexibel ausgebildet ist, wird der Lichtstrahl durch Mehrfachreflexionen an den Grenzflächen des Lichtwellenleiters weitergeführt. Am Ende des Lichtwellenleiters 5 tritt der Sendestrahl, unter einem von den Materialeigenschaften des Lichtwellenleiters abhängigen Divergenzwinkel, wieder aus und trifft dabei auf eine Auskoppeloptik 6. Die Auskoppeloptik 6 ist so dimensioniert, dass sie die Austrittsfläche des Lichtwellenleiters 5 auf eine Lichtempfangseinheit 2 abbildet. Alternativ wäre auch eine Ausführungsform ohne Auskoppeloptik 6 denkbar. Dann sollte eine Empfangsoptik 13 an der Lichtempfangseinheit 2 entsprechend ausgebildet sein.

Befindet sich nun kein Objekt zwischen der Lichtsendeeinheit 1 und der Einkoppeloptik 4 und auch kein Objekt zwischen der Auskoppeloptik 6 und der Lichtempfangseinheit 2, gelangt zumindest eine Teilmenge des Sendestrahles zum photoelektrischen Lichtempfänger E, welcher die auftreffende Lichtenergie in eine elektrische Größe umwandelt.

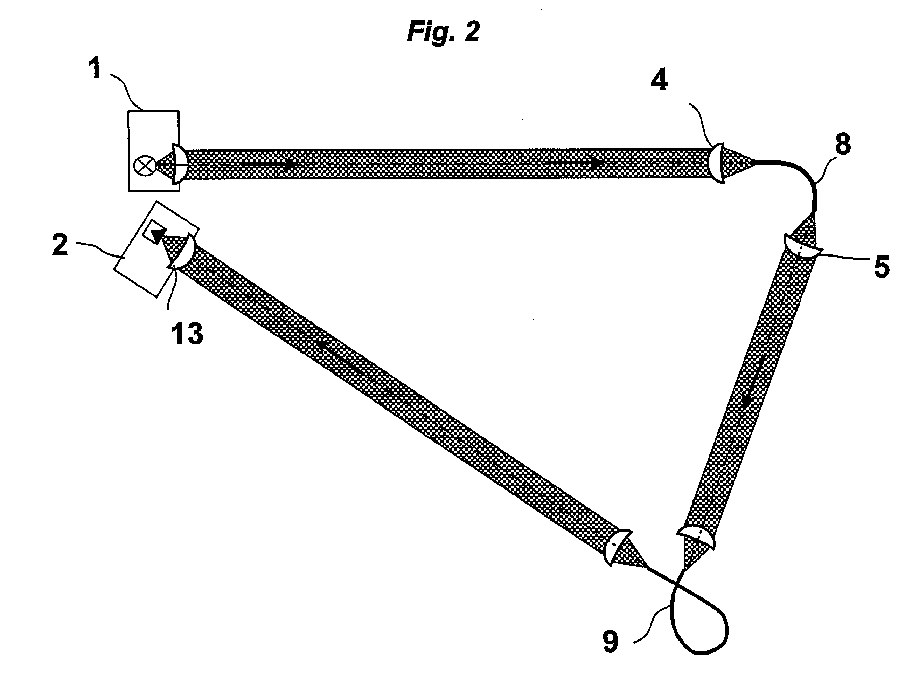

In Fig. 2 ist eine schematische Darstellung einer weiteren Ausführungsform der erfindungsgemäßen optoelektronischen Vorrichtung dargestellt, in welcher mit zwei Vorrichtungen zur Strahlumlenkung drei Teilstrahlen zwischen der Lichtsendeeinheit 1 und der Lichtempfangseinheit 2 erzeugt werden.

Aufgrund der Flexibilität der beiden Lichtwellenleiter 8 und 9 können die drei Teilstrahlen jede beliebige Lage im Raum einnehmen. Grundsätzlich ist es auch möglich, noch weitere Strahlumlenkungen einzufügen, um den Sendestrahl in weitere Teilstrahlen zu zerlegen. Es ist somit leicht erkennbar, dass auf diesem Wege mit nur einer aktiven Lichtsende- und Lichtempfangseinheit auch recht komplexe Strahlführungen möglich sind.

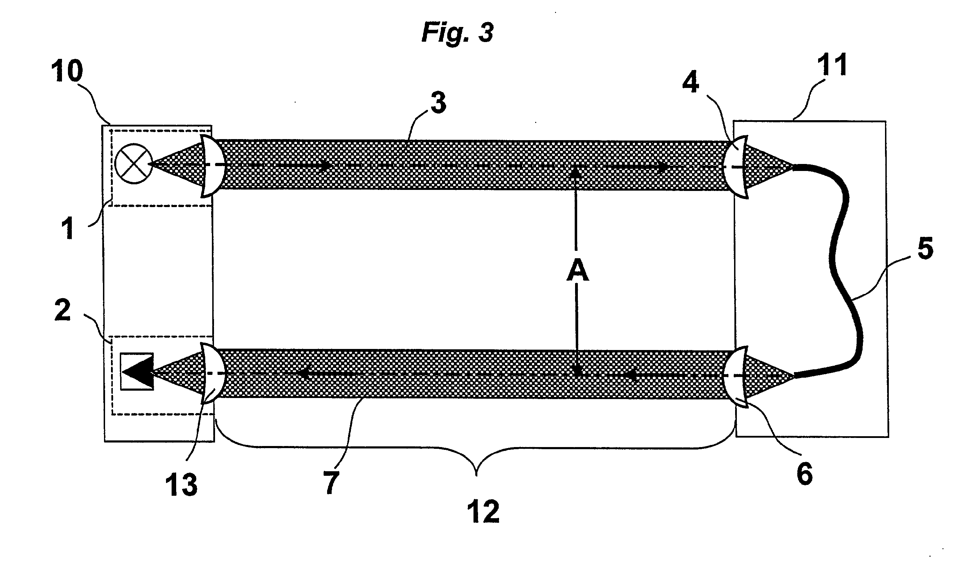

In Fig. 3 ist eine Strahlführung dargestellt, in welcher die beiden Teilstrahlen 3 und 7 um einen Abstand A versetzt in paralleler Richtung verlaufen. Derartige Anordnungen zur Zugangsabsicherung, bei denen die beiden Teilstrahlen in unterschiedlicher Höhe vom Fußboden angeordnet sind, werden oft vorgeschrieben, um die Gefahr des Über-/Unterschreitens der Schutzeinrichtung auszuschließen.
Bei Verwendung der in Fig. 3 beschriebenen Anordnung können die aktiven Lichtsendeeinheit 1 und die Lichtempfangseinheit 2 in einem gemeinsamen Gehäuse 10 angeordnet sein, während auf der gegenüberliegenden Seite der Überwachungsstrecke 12 die Ein- und Auskoppeloptik 4 und 6 sowie der Lichtwellenleiter 5 ebenfalls in einem gemeinsamen Gehäuse 11 integriert sind.

Unter dem Begriff "Licht" ist hierbei nicht nur der dem menschlichen Auge zugängliche Wellenlängenbereich zu verstehen, sondern auch die angrenzenden Spektralbereiche aus dem ultravioletten und infraroten Bereich. Darüber hinaus sind in der Erfindung sämtliche Lichtarten von Gleichlicht und Wechsellicht möglich.

## Patentansprüche

1. Optoelektronische Vorrichtung, insbesondere zur variablen richtungsveränderlichen Strahlführung, welche am Beginn einer Strahlstrecke von einer aktiven Lichtsendeeinheit (1) und am Ende der Strahlstrecke von einer aktiven Lichtempfangseinheit (2) begrenzt ist und dass zwischen der Lichtsendeeinheit und der Lichtempfangseinheit mindestens eine, die geradlinige Ausbreitungsrichtung des Sendestrahls veränderbare Umlenkeinheit, angeordnet ist, **dadurch gekennzeichnet, dass** die Umlenkeinheit einen Lichtwellenleiter zur Umlenkung des Sendestrahls aufweist und der Sendestrahl in eine Einkoppeloptik (4) zur Fokussierung des einfallenden Lichtstrahls auf den Lichtwellenleiter (5) eingekoppbar ist und eine Optik (6, 13) zur Ausrichtung des aus dem Lichtwellenleiter (5) austretenden Lichtstrahls auf die Lichtempfangseinheit (2) angeordnet ist.

2. Optoelektronische Vorrichtung nach Anspruch 1, **dadurch gekennzeichnet, dass** der Lichtwellenleiter zwischen der Einkoppeloptik und der Optik zur Ausrichtung des Lichtstrahls auf die Lichtempfangseinheit, mit einer lösbaren Halterung versehen ist.

3. Optoelektronische Vorrichtung nach Anspruch 1 oder 2, **dadurch gekennzeichnet, dass** der Lichtwellenleiter in seiner optischen Übertragungseigenschaft und/oder seiner physikalischen Eigenschaft an die Einsatzbedingungen angepasst ist.

4. Optoelektronische Vorrichtung nach einem der vorhergehenden Ansprüche, **dadurch gekennzeichnet, dass** die Lichtsendeeinheit und Lichtempfangseinheit räumlich benachbart angeordnet sind.

5. Optoelektronische Vorrichtung nach einem der vorhergehenden Ansprüche, **dadurch gekennzeichnet, dass** die Lichtsendeeinheit und die Lichtempfangseinheit in einem gemeinsamen Gehäuse (10) angeordnet sind und einen gemeinsamen Versorgungs-/Signalanschluss aufweisen.

6. Optoelektronische Vorrichtung nach einem der vorhergehenden Ansprüche, **dadurch gekennzeichnet, dass** die Einkoppeloptik und/oder die Auskoppeloptik aus einer mehrstufigen Abbildungsoptik besteht.

7. Optoelektronische Vorrichtung nach einem der vorhergehenden Ansprüche, **dadurch gekennzeichnet, dass** die Einkoppeloptik und/oder die Auskoppeloptik in ihrer Brennweite und/oder Öffnung veränderbar ausgeführt ist.

8. Optoelektronische Vorrichtung nach einem der vorhergehenden Ansprüche, **dadurch gekennzeichnet, dass** die Lichtsendeeinheit und die Lichtempfangseinheit auf einer Seite einer Überwachungsfläche und die Umlenkeinheit (11) auf der gegenüberliegenden Seite der Überwachungsfläche angeordnet sind und der Lichtstrahl mindestens zweimal um einen einstellbaren Betrag (A) versetzt die Überwachungsfläche (12) durchstrahlt.
